# EUROPEAN PATENT SPECIFICATION

(11) **EP 3 774 093 B1**
(45) Date of publication and mention of the grant of the patent: **04.12.2024**
(21) Application number: 19715232.5
(22) Date of filing: 14.03.2019
(51) Int. Cl.: B08B 17/06

(54) **THERMOPLASTIC POLYMER BODY WITH A SURFACE STRUCTURE, PROCESS FOR ITS MANUFACTURE AND HOUSEHOLD APPLIANCE COMPRISING THE THERMOPLASTIC POLYMER BODY**
THERMOPLASTISCHER POLYMERKÖRPER MIT OBERFLÄCHENSTRUKTUR, VERFAHREN ZU DESSEN HERSTELLUNG UND HAUSHALTSGERÄT MIT DEM THERMOPLASTISCHEN POLYMERKÖRPER
CORPS POLYMÈRE THERMOPLASTIQUE DOTÉ D'UNE STRUCTURE DE SURFACE, PROCÉDÉ POUR SA FABRICATION ET APPAREIL ÉLECTROMÉNAGER COMPRENANT LE CORPS POLYMÈRE THERMOPLASTIQUE

(30) Priority: 28.03.2018 ES 201830308
(43) Date of publication of application: 17.02.2021
(73) Proprietor: BSH Hausgeräte GmbH, 81739 München (DE)
(72) Inventor: BOBARU, Stefania Carmen, 50001 Zaragoza (ES); CALABIA GASCÓN, Nestor, 50018 Zaragoza (ES); MERCADER PLOU, Victor Daniel, 50016 Zaragoza (ES); MURILLO VILLUENDAS, Ester, 50290 Epila (ES)
(86) International application number: PCT/IB2019/052089
(87) International publication number: WO 2019/186312

(56) References cited:
- WO-A1-2013/003373
- WO-A1-2016/203329
- WO-A1-2017/162409
- CN-A- 1 760 112
- CN-A- 106 185 792
- KR-B1- 101 666 023
- US-A1- 2013 115 420
- US-A1- 2017 128 707

## Description

The present invention relates to a thermoplastic polymer body with a surface structure, a process for its manufacture and a household appliance comprising the thermoplastic polymer body. In particular, the invention relates to a thermoplastic polymer body with a surface structure that contains in a smooth surface a regular pattern of micro-scale or smaller pillars, a process for its manufacture and a household appliance comprising the thermoplastic polymer body.

Household appliances can come into contact with dust, dirt, food or human skin. This may lead to problems with cleanliness and, more importantly, hygiene as on the long term microorganisms may deposit and proliferate on the household appliance. Moreover, articles which have been soiled in various ways are in general cleaned in water-bearing household appliances. Food remains therefore arise in dishwashers and the range of dirt occurring in laundry items to be cleaned in washing machines is typically even greater. Thus, in particular at sites that are difficult to access, dirt can arise and accumulate and may be a good nutrient for microorganisms or may lead to bad odor. It is customary to use thermoplastic polymer bodies for various parts in household appliances.

It would thus be desirable to provide a household appliance with surfaces that exhibit self-cleaning properties and/or prevent the growth of surface attached microbial communities.

Altering the surface structure of a solid substrate allows altering its surface properties. By creating micro-scale and/or nano-scale structures, for example, the hydrophobicity of a surface can be altered as such that it becomes highly water repellent.

Many studies are focused on either reproducing micro/nanostructures with superhydrophobic, antimicrobial and self-cleaning properties from the nature (e.g. the lotus leaf, cicada wings, etc.) and also in designing new micro/nanostructures with these functional properties. For example, lotus leaves are known for their self-cleaning properties. The surface of lotus leaves shows a distinct micro-scale and nano-scale architecture. Water has a high surface tension so that the water droplets assume a nearly spherical shape. A sphere has a minimal surface and therefore has least surface energy. On contact with a surface, adhesion forces result in spreading of the droplet and wetting of the surface, either complete or incomplete. The degree of wetting depends on the surface properties, such as the structure, and the surface tension of water or generally a fluid. The surface of lotus leaves shows a double structure that reduces the contact area and adhesion force between droplet and surface significantly, causing the leaves to be hydrophobic and highly water-repellent. The hierarchical double structure is formed out of characteristic papillae with 10 to 20 µm in height and 10 to 15 µm in width with epicuticular waxes superimposed. The antimicrobial functional property of a solid surface is the ability to prevent the growth of surface attached microbial communities known as biofilms.

However, until now there is no micro/nanostructure which presents all those functional properties simultaneously. Nowadays, there are plenty of nanofabrication solutions to achieve these functional properties including electrochemical deposition, chemical vapour deposition, plasma etching, photolithography, but these techniques are failing to control the micro/nanostructure parameters and fidelity precisely, involve the use of chemical substances, are very expensive or the coatings are not durable enough for consumer product requirements.

Dirt particles are picked up by water droplets rolling off a hydrophobic surface and thus are easily removed. If a water droplet rolls across a contaminated surface area the adhesion between the dirt particle, irrespective of its composition, and the droplet is higher than the adhesion between the particle and the surface.

A measure for the hydrophobicity of a surface is the contact angle of a droplet on the surface. The higher the contact angle, the more hydrophobic is the surface. The static contact angle is defined as the measure of the wettability of a solid surface by a liquid drop, geometrically as the angle formed by a liquid at the three phases boundary where a liquid, gas and solid intersect. The sliding contact angle (SCA) represents the required minimum angle to move the droplet on a solid surface. The maximum static contact angle represent the advancing angle and the minimum static contact angle corresponds to the receding angle. The contact angle hysteresis is designated as the difference of the advancing contact angle and receding contact angle for a contact line moving in an opposite direction at the same velocity. There is a proportionality relationship between the sliding contact angle and the contact angle hysteresis. Surfaces with a contact angle <95° are referred to as hydrophilic and those with a contact angle >95° are referred to as hydrophobic. For a solid surface to be considered as superhydrophobic, its static contact angle must have values > 150° and its sliding angle has to have values < 10°. More particular, surfaces with contact angles up to 160° to 180° are considered super-hydrophobic, which means that only 3% to 0.5% of the droplet area is in contact with the surface leading to the observed self-cleaning effect.

Surface modified materials are known.

The publication US 2015/0136226 A1 discloses a metal or metal alloy comprising at least one surface region including a plurality of micro-scale structure shapes and a plurality of nano-scale structure shapes, wherein the at least one surface region is super-hydrophobic, wherein the at least one surface portion has a spectral reflectance of less than 60% for at least some wavelengths of electromagnetic radiation in the range of 0.1 µm to 500 µm.

The publication US 5,635,089 discloses a surface on a material having periodic conical surface structures of less than 200 microns in height and less than 100 microns in thickness. The surface comprises further valleys less than 300 microns in width between said conical surface structures.

The publication WO 2015/048 504 A2 discloses a liquid-repellent artificial surface comprising: a surface containing thereon a plurality of microstructures separated by a pitch of less than 500 µm and having a doubly re-entrant topology situated atop respective base structures and a liquid-solid contact fraction (*f*ₛ) of less than 50%, wherein the doubly re-entrant topology comprises a cap portion and downwardly extending lip extending from a periphery of the cap portion.

The publication US 2013/0138103 A1 discloses an electrosurgical unit with micro/nano structure, comprising: a handle; and a blade, arranged at an end of the handle, and having a micro/nano structure composed of a hybrid of micro/nano elements.

The publication US 2004/0208791 A1 discloses an ultraphobic surface comprising: a substrate having a surface with a multiplicity of substantially uniformly shaped asperities thereon, each asperity having a common asperity rise angle relative to the substrate, the asperities positioned so that the surface has a contact line density measured in meters of contact line per square meter of surface area equal to or greater than a reference contact line density value.

The publication EP 2 669 040 A1 discloses a process for manufacturing a surface, wherein the surface exhibits structures having sizes in the sub-micrometer range. The surface comprises a material, which contains at least one ceramic, at least one inorganic glass, carbon, boron, silicon, at least one inorganic fiber and/or non-fibrous carbon and/or boron nitride containing composite material with a ceramic and/or carbon matrix, at least one metal-ceramic composite material or at least one composite material made of a metal and/or a metal alloy, which contains heat conducting carbonaceous and/or boron nitride containing particles and/or fibers and which may be coated at least partially with an oxide layer, or is chosen from a combination of at least two of those. A starting surface embracing the material, which does not yet exhibit structures having sizes in the sub-micrometer range and which is accessible for a laser irradiation and whereupon the surface structures are to be manufactured, is completely scanned by a pulsed laser beam.

The publication EP 3 222 365 A1 discloses a household appliance with at least one self-cleaning surface provided on a base material, wherein the self-cleaning surface comprises a plurality of dual micro-scale structures, wherein a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry. The first geometry is preferably a micro-pillar geometry and the second geometry is preferably a micro-cell geometry.

The publication US 2016/198707 A discloses an antimicrobial composition, which comprises an active agent that reduces the spread of pathogens, wherein the active agent is mixed with a water-soluble polymer, in order to produce a mixture in which the polymer forms a continuous phase, from which the active agent is capable of being released, the composition further comprising a hydrophobic polymer.

The publication WO 2016/090368 A1 discloses a multifunctional particle including a surface of the particle; a first moiety coupled to the surface and having at least one substantially hydrophobic appendage; and a second moiety coupled to the surface and having at least one appendage comprising a reactive functional group and a substantially hydrophilic repeating unit, whereby the particle is substantially superhydrophobic as a result of the substantially hydrophobic appendage, chemically reactive as a result of the reactive functional group, and migratory to a surface of a substantially hydrophobic matrix in which the particle may be included as a result of the substantially hydrophilic repeating unit. Additionally, antimicrobial functional groups may be coupled to the surface.

WO 2013/003373 A1 discloses surfaces for resisting and reducing biofilm formation, particularly on medical articles. The surfaces include a plurality of microstructure features, arranged according to at least one unit cell. Also disclosed are methods for creating anti-adherent surfaces.

WO 2016/203329 A1 discloses a household appliance component for a household appliance, wherein said household appliance component at least in portions has a superhydrophobic microstructured surface.

CN 1 760 112 A discloses a superhydrophobic surface with dual microscopic structures features comprising micron-class arrays and nano-class arrays that are created on the surface of a polymer film through microprocessing and anodizing. The length, width, height and gap of microposts in the array are 10-100 microns for the micron array and 10-100 nm for the nano array.

US 2013/0115420 A1 discloses in accordance with the preamble of claim 1 a nano composite with superhydrophobic surfaces including a bulk portion and a surface portion having a superhydrophobic pattern, wherein the bulk portion and the surface portion include the same material, and methods of manufacturing of the nano composite.

WO 2017/162409 A1 discloses a household appliance and a process for its manufacturing, with at least one self-cleaning surface provided on a base material, wherein the self-cleaning surface comprises a plurality of dual micro-scale structures, wherein a dual micro- scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry, wherein the first geometry is a micro-pillar geometry and the second geometry is a microcell geometry.

Against this background it is an object underlying the present invention to provide a thermoplastic polymer body and a household appliance comprising this thermoplastic polymer body wherein superhydrophobic, antimicrobial and cleaning properties are improved, as well as a process for its manufacture.

In accordance with the present invention, this object is achieved by a thermoplastic polymer body according to claim 1, a process according to claim 6 for its manufacture and a household appliance according to claim 7 comprising this thermoplastic polymer body. Preferred embodiments of the invention are detailed in the respective dependent claims. Preferred embodiments of the thermoplastic polymer body correspond to preferred embodiments of the household appliance and the process for the manufacture of the thermoplastic polymer body, even if they are not referred to herein in detail.

The invention is thus directed to a thermoplastic polymer body according to claim 1 with a surface structure that contains in a smooth surface a regular pattern of micro-scale or smaller pillars, wherein the regular pattern of micro-scale or smaller pillars comprises two types of pillars that differ in height and cross-section and wherein all neighboring pillars are separated by a separation distance d ≤ 1 µm. The pillars are prisms having a rectangular cross-section. A cross-section ratio C₁/C₂ between prisms of a first type with a height H₁ and prisms of a second type with a height H₂ is above 50.

The separation distance d is preferably the maximum distance between neighboring pillars. In the case of pillars with a rectangular cross-section, the closest neighboring pillar is taken as reference.

The antimicrobial functional property of a solid surface is the ability to prevent the growth of surface attached microbial communities known as biofilms. It has been found that the antimicrobial effect is especially pronounced when the separation distance d is ≤ 1 µm. It is believed that with a separation distance d ≤ 1 µm, the adhesion of bacteria and other microorganisms to the materials is difficult or even avoidable.

The pillars protrude from the smooth surface. The angles between the pillars and the smooth surface may be different. A thermoplastic polymer body is however preferred, wherein the pillars are oriented in a vertical direction from the smooth surface of the thermoplastic polymer body. The smooth surface may be flat or curved.

The mechanical durability stands for the property of a solid with micro/nanostructured surface to withstand mechanical stress without the degradation of the patterns and the loss of the liquid repellency and antimicrobial properties. The thermoplastic polymer bodies of the present invention can provide such a mechanical durability.

According to the invention, the two types of pillars differ in height and cross-section. The cross-section is measured in general in a plane which is parallel to the smooth surface. Moreover, it is preferred that the cross-section is essentially constant over the height of the pillar, except perhaps for a high point.

A thermoplastic polymer body is moreover preferred according to the invention, wherein the regular pattern consists of two types of pillars. It is however not excluded in the present invention that the regular pattern contains more than two types of pillars.

In the regular pattern, the distance between the same type of pillars is preferably the same, unless a neighboring pillar is of another type where the distance can be greater.

In general, the pillars are 1 µm to 25 µm in height and 1 µm to 25 µm in width, but more preferably, 3 µm to 5 µm in height and 5 µm to 15 µm in width.

It is furthermore preferred that these pillars differ in height such that a height ratio h₁/h₂ between pillars of a first type with the height H₁ and pillars of a second type with the height H₂ is in the range of from 1.2 to 1.6, preferably in the range of from 1.3 to 1.5.

According to the invention, the pillars are prisms. It is then preferred that the prisms have a quadratic cross-section and differ in height such that a height ratio H₁/H₂ between prisms of a first type with a height H₁ and prisms of a second type with a height H₂ is in the range of from 1.5 to 5, preferably in the range of from 1.8 to 3. . Preferably the cross-section ratio C₁/C₂ is above 100, and even more preferably in the range of 200 to 500.

The thermoplastic polymer body of the present invention contains or consists of a thermoplastic polymer. The thermoplastic polymer body can be a three-dimensional thermoplastic polymer body or a surface coating including a film covering at least partially a surface made of another material. The other material might be a metal or a different thermoplastic body or a combination thereof. Preferably, the pillars contain or consist of a thermoplastic polymer selected from polypropylene, polymethylmethacrylate (PMMA) and polymers of the thermoplastic vulcanized class. It is then even more preferred that the polymer of the thermoplastic vulcanized class (TPV) comprises polypropylene in a thermoplastic hard phase and EPDM rubber in an elastic soft phase.

The invention is moreover directed to a process according to claim 6 for the manufacture of a thermoplastic polymer body with a surface structure that contains in a smooth surface a regular pattern of micro-scale or smaller pillars, wherein the regular pattern of micro-scale or smaller pillars comprises two types of pillars that differ in height and cross-section, wherein all neighboring pillars are separated by a separation distance d ≤ 1 µm, and wherein the pillars are prisms having a rectangular cross-section such that a cross-section ratio C₁/C₂ between prisms of a first type with a height H₁ and prisms of a second type with a height H₂ is above 50, comprising the steps:
(a) providing an untreated thermoplastic polymer body with a smooth surface;
(b) heating the untreated thermoplastic polymer body of step (a) above the glass transition temperature of the untreated thermoplastic polymer body to sufficiently soften the thermoplastic polymer;
(c) pressing a pre-fabricated mold with a negative of the to imprinted regular pattern on the softened untreated thermoplastic polymer body of step (b); and
(d) removing the pre-fabricated mold to obtain the thermoplastic polymer body with the surface structure.

Preferably, the process of the invention is carried out by Thermal Nanoimprint Lithography (Th-NIL). Th-NIL is a mechanical forming technique that physically molds a deformable material into a desired shape. A thermal nanoimprint process contains the following steps:
1. A pre-fabricated mold that contains nano-scale relief features is applied as template onto a thermoplastic film (resin film) as substrate at a controlled temperature and a controlled pressure, whereby a contrast is created in the thermoplastic film.
2. After cooling down, the template and the substrate are separated and the pattern is replicated on the substrate.

Important parameters in the process of Th-NIL of thermoplastic polymers are in general the mold-resin interface and the resin-substrate interface. When the adhesion of the resin to the mold is too strong, the former one cannot be removed. On the other hand, if the interaction is too small, the pattern of the mold cannot be precisely transferred onto the resin. It is noted that the imprinting of hydrophobic polymers, as are for example polypropylene and TPVs, on hydrophilic substrates is difficult. The surface adhesion between two materials is governed by both mechanical and chemical interactions. In the case of polystyrene layers for example, an imprint pressure might be chosen to be 3-6 bar (170-190 °C), preferably 4 bars and the imprint temperature to be in the range of from 180 °C to 190 °C (70 °C-100 °C higher than glass transition temperature) for an imprint time of 20-40 min, preferably 30 min.

The Th-NIL represents a micro-fabrication technique that relies on direct mechanical deformation and can achieve lateral resolution of 5 nm. Th-NIL allows to manufacture multi-level patterns in a one step structuring process saving time and material resources. The desired functional properties can be achieved according to the invention by transferring the regular pattern of micro-scale or smaller pillars comprising two types of pillars that differ in height and/or cross-section and wherein all pillars are separated by a separation distance d ≤ 1 µm, to the entire class of thermoplastic polymers, including in particular polypropylene, polymethylmethacrylate (PMMA) and the thermoplastic vulcanized class (TPVs) by Th-NIL micro/nanostructuration. Thermoplastic polymers soften when heated, especially after the glass temperature has been reached. The printing process of Th-NIL, which can be also termed as a curing process, is in general completely reversible since no chemical bonding takes place. This characteristic allows thermoplastics to be remolded and recycled without negatively affecting the material's physical properties. TPVs are specific compounds of preferably PP as thermoplastic hard phase and EPDM rubber as elastic soft phase that have been dynamically vulcanized during the compounding step. They were originally conceived to bridge the gap between thermoplastic materials and vulcanized EPDM.

Finally, the invention is directed to a household appliance according to claim 7 comprising a thermoplastic polymer body according to claim 1 with a surface structure that contains in a smooth surface a regular pattern of micro-scale or smaller pillars, wherein the regular pattern of micro-scale or smaller pillars comprises two types of pillars that differ in height and cross-section, wherein all neighboring pillars are separated by a separation distance d ≤ 1 µm, and wherein the pillars are prisms having a rectangular cross-section such that a cross-section ratio C₁/C₂ between prisms of a first type with a height H₁ and prisms of a second type with a height H₂ is above 50. The household appliance is not limited according to the invention.

However, in a preferred embodiment the inventive household appliance is used for storing, treating and/or preparing food. The expression "storing" refers in particular to storing of food in a protective environment to prevent or slow down the process of spoiling. Such protective environment may, for example, include cooling or freezing. The expression "treating" refers in particular to cutting, squeezing, stirring or kneading of food such as vegetables, fruit, cream or dough. The expression "preparing" refers in particular to cooking, baking, microwaving, extracting or fermenting of food.

In the case the household appliance is used for storing, treating and/or preparing food, it is preferably selected from a group consisting of a refrigerator, a freezer, a coffee machine, an oven, a microwave, a steamer, a food processor and a juicer.

In another preferred embodiment, the household appliance is a water-bearing household appliance. In general, a water-bearing household appliance is a household appliance during the operation of which water is used. The items to be cleaned can be, in particular, tableware or laundry items. According to the invention, cleaning should also be understood as freshening. Accordingly, a water-bearing household appliance can also be a dryer.

Preferably, if the inventive household appliance is a water-bearing household appliance, it is selected from a group consisting of a dishwasher, a washing machine, a washer-dryer and a dryer.

Other inventive household appliances may be boilers, steam irons, air humidifiers, air conditioners, devices for cleaning and maintenance of floors, vacuum cleaners or kitchen hoods.

The invention has numerous advantages. The invention allows to manufacture thermoplastic polymer bodies and thus household appliances in which they are incorporated that simultaneously combine superhydrophobic, antimicrobial and mechanical durable characteristics. The invention is thus especially useful in the home appliances industry, but also in the fields of aeronautics, marine and surgery. The regular patterns prescribed by the present invention are made of a variety of pillars having different shapes or surfaces contours. Through this invention, the functional properties mentioned above are achieved by proper wettability control, e.g. anti-biofouling, since a wet medium is prone to biofilm formation, or/and anti-condensation. The growth of bacterial colonies in for example household appliances, in particular washing machines and dishwashers, by water accumulation and organic rests on thermoplastic polymer surfaces is avoided. The surfaces of the thermoplastic polymer bodies of the present invention are easy-to-clean, more hygienic and more energy efficient. By using one single pattern to obtain simultaneously three functional properties cost effective solutions are achieved. Moreover, these properties are going to improve the quality of life of home appliances users. A particular advantage of the use of the present invention lies therein that the surfaces provided by the present invention are able to function for years. Cleaning is less elaborate due to the specific surfaces. In particular it is possible to clean with a lower frequency.

The process of manufacturing is furthermore a green and environmentally friendly one and can easily be adapted for industrial automation process chains. The range of polymeric base materials that can be used for manufacturing is broad and the surface structure can be manufactured in just a single step with high precision and reproducibility.

The manufacture of the simultaneously superhydrophobic, antimicrobial and mechanical durable materials is preferably effected by employing Thermal Nanoimprint Lithography (Th-NIL), an environmentally friendly technique able to create micro/nano-features on a material by physical modification, a process that does not involve any use of chemical substances. Moreover, the use of the Th-NIL technology allows to produce the regular pattern with a superior reproduction fidelity.

Th-NIL is in fact the most environmentally technique among the nanoimprint techniques in that it does not require electron beams, radiation or chemicals, has high resolution and represents the nanolithography technique that can be implemented without too much complications for large scale production e.g. roll-to-roll or step&stamp. The Th-NIL technology avoids layers and coatings. Thus, the bulk initial material properties will not be modified ensuring durability and chemical stability for a life time. No chemical products are used nor waste products and the thermoplastic polymers used are easily recyclable. Higher durability of the micro/nanostructures compared to normal coatings is achieved. The Th-NIL technique allows the reproduction of nanostructures that are not possible to obtain with such high resolution by other technologies. The short cycle time for creation of structures on large areas makes this technique also compatible with the production processes. The transfer of the regular pattern described herein can be achieved in one step.

In the following the invention will be described in more detail with respect to specific non-limiting embodiments of the present invention by reference to Figs. 1 to 11.
Fig. 1 shows a top view of a surface structure that contains a first regular pattern in an otherwise not shown embodiment of a thermoplastic polymer body which is not part of the present invention.
Fig. 2 shows a first lateral view of a surface structure that contains the first regular pattern shown in Fig. 1.
Fig. 3 shows a second lateral view of a surface structure that contains the first regular pattern shown in Fig. 1.
Fig. 4 shows a perspective view of a surface structure that contains the first regular pattern shown in Fig. 1.
Fig. 5 shows a top view of a surface structure that contains a second regular pattern in an otherwise not shown embodiment of a thermoplastic polymer body of the present invention.
Fig. 6 shows a lateral view of the surface structure that contains the second regular pattern shown in Fig. 5.
Fig. 7 shows a perspective view of the surface structure that contains the second regular pattern shown in Fig. 5.
Fig. 8 shows for thermoplastic polymer bodies made of two different thermoplastic polymers the effect of the regular pattern of the surface structure of the present invention on the sliding contact angle (SCA).
Fig. 9 shows for thermoplastic polymer bodies made of two different thermoplastic polymers the effect of the surface structure of the present invention on the reduction of the sliding contact angle (SCA) in abrasion experiments.
Fig. 10 illustrates a process for the manufacture of a thermoplastic polymer body of the present invention using Thermal Nanoimprint Lithography (Th-NIL).
Fig. 11 shows the changes of temperature and pressure during the process shown in Fig. 10.

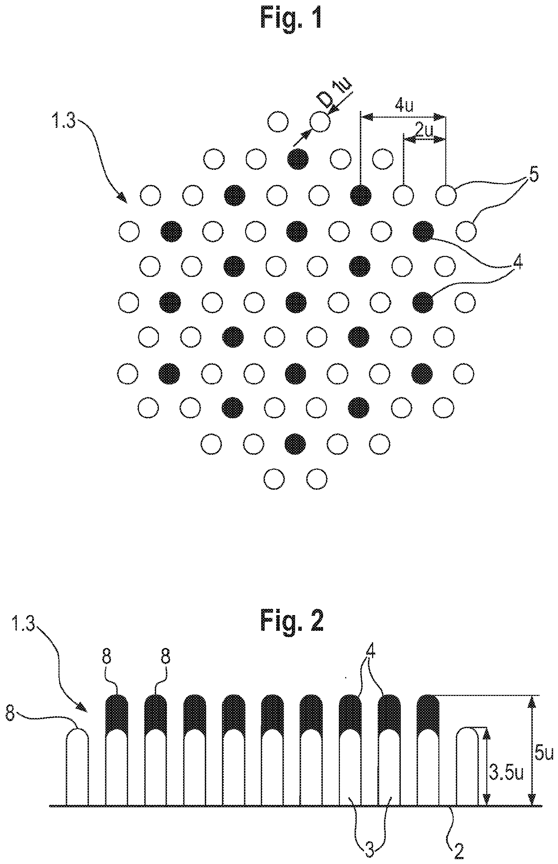

Fig. 1 shows a top view of a surface structure 1 that contains a first regular pattern 3 in an otherwise not shown embodiment of a thermoplastic polymer body which is not formed according to the present invention. The regular pattern 3 of micro-scale or smaller pillars 4, 5 comprises two types of pillars 4, 5, as illustrated in this view by black and white circles. Both have the same diameter, here 1 unit (1 u), but different heights. The minimum dimension is 1 unit. Although not recognizable in this top view, the height H₁ of the first type of pillars 4 is 5 units, while the height H₂ of the second type of pillars 5 is 3.5 units, which are both measured from the base of the pillar to the top of the high point, i.e. from the smooth surface 2. The ratio H₁/H₂ is always 1.42. The pillars 4, 5 have all the same diameter.

As is shown in Fig. 1, the distribution of the pillars follows a honeycomb structure, i.e. a hexagonal shape. The shorter pillars 5 are placed on each one of the apexes, whereas the higher pillars 4 are situated at the center of each hexagon. The side length of the base hexagon is 2 units. 1 unit can vary from 200 nm to 2000 nm, provided that the distance d is ≤ 1 µm, here d = 1 µm.

Fig. 2 shows a first lateral view of a surface structure 1 that contains the first regular pattern 3 shown in Fig. 1. The regular pattern 3 of micro-scale or smaller pillars 4, 5 comprises thus two types of pillars 4, 5, as illustrated in this view by black and white cylinders which have different heights, which protrude vertically from a smooth flat surface 2. Namely the black pillars 4 have a size H₁ and the white pillars 5 have a size H₂ such that H₁/H₂ is in this case always 1.42. The high points 8 are in this embodiment for each pillar 4, 5 hemispheres.

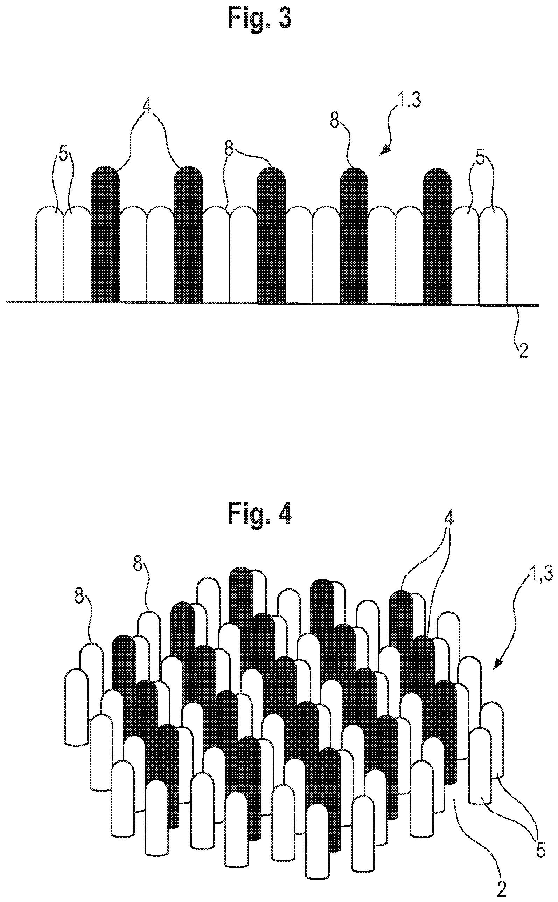

Fig. 3 shows a second lateral view of a surface structure 1 that contains the first regular pattern 3 shown in Fig. 1. The regular pattern 3 of micro-scale or smaller pillars 4,5 comprises thus two types of pillars 4, 5, as illustrated in this view by black and white cylinders which have different heights, which protrude vertically from a smooth flat surface 2. Namely the black pillars 4 have a size H₁ and the white pillars 5 have a size H₂ such that H₁/H₂ is in this case always 1.42. The high points 8 are in this embodiment for each pillar 4, 5 hemispheres.

Fig. 4 shows a perspective view of a surface structure 1 that contains the first regular pattern 3 shown in Fig. 1. The regular pattern 3 of micro-scale or smaller pillars 4, 5 comprises thus two types of pillars 4, 5, as illustrated in this view by black and white cylinders which protrude here from a smooth flat surface 2. The high points 8 are in this embodiment for each pillar 4, 5 hemispheres.

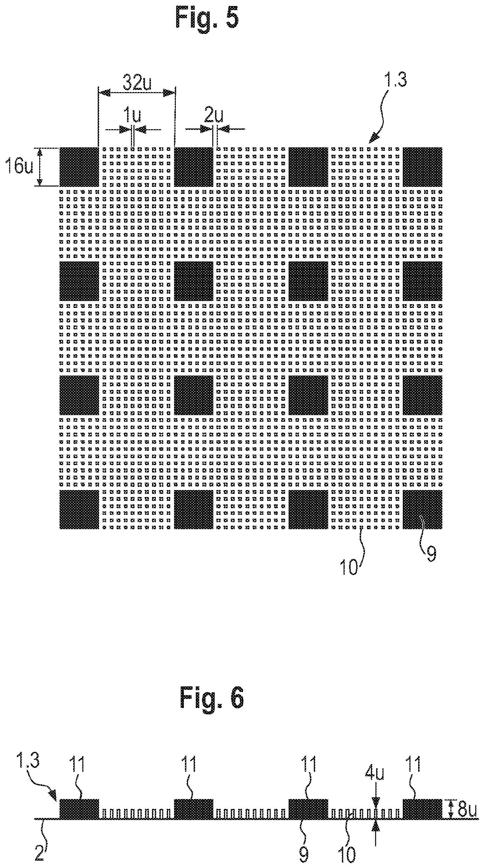

Fig. 5 shows a top view of a surface structure 1 that contains a second regular pattern 3 in an otherwise not shown embodiment of a thermoplastic polymer body of the present invention. The regular pattern 3 of micro-scale or smaller pillars 9, 10 comprises two types of pillars 9, 10, here prisms, as illustrated in this view by black and white squares of different sizes. The squares of the prisms 9 of a first type have a side length of 16 units (16 u) while the squares of the prisms 10 of a second type have a side length of 1. Accordingly, the cross-section ratio C₁/C₂ between the prisms of the first type 9 and the prisms of the second type 10 is in this embodiment 256. The smallest distance between two prisms of the first type 9 is 32 units while the smallest distance between two prisms of the second type 10 as well as the distance between a prism of the first type 9 and a closest prism of the second type 10 is 2 units. In this particular case this distance corresponds to an actual value of 1 µm.

Fig. 6 shows a lateral view of the surface structure 1 that contains the second regular pattern 3 shown in Fig. 5. The regular pattern 3 of micro-scale or smaller prisms 9, 10 as pillars comprises thus two types of prisms 9, 10 as illustrated in this view by black and white cuboids of different heights which protrude vertically from a smooth flate surface 2. The first type 9 of the prisms has in this embodiment a height H₁ of 8 units and the second type 10 of the prisms a height H₂ of 4 units. Accordingly, the ratio H₁/H₂ is in this embodiment 2. The high points 11 are in this embodiment for each prism 9, 10 flat, i.e. even.

As shown in Fig. 6, the distribution of the prisms 9, 10 is such that the larger prisms 9 are organized in a square matrix, wherein the distance between two neighboring prisms 9 is 32 units. 1 unit can take values from 250 nm to 2000 nm, provided that the distance d between the prisms 9, 10, taken in a direction vertical to the side length between neighboring prisms is ≤ 1 µm.

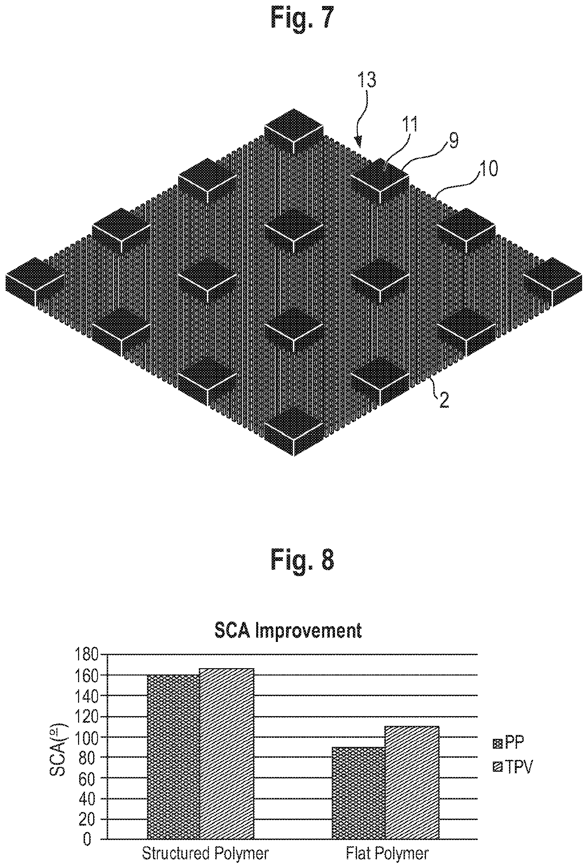

Fig. 7 shows a perspective view of the surface structure 1 that contains the second regular pattern 3 shown in Fig. 5. The regular pattern 3 of micro-scale or smaller pillars 9, 10 comprises thus two types of pillars 9, 10, as illustrated in this view by black and white cuboids which protrude here from a smooth flat surface 2. The high points 11 are in this embodiment for each pillar 9, 10 flat.

Fig. 8 shows for thermoplastic polymer bodies made of two different thermoplastic polymers, namely polypropylene (each left column) and TPV (each right column), the effect of the regular pattern of the surface structure of the present invention on the sliding contact angle (SCA). As can be seen from a comparison between the left two columns (structured in accordance with the present invention) and the right two columns (not structured, flat polymer without surface structure), the SCA increases significantly for thermoplastic bodies with a surface structure as prescribed by the present invention.

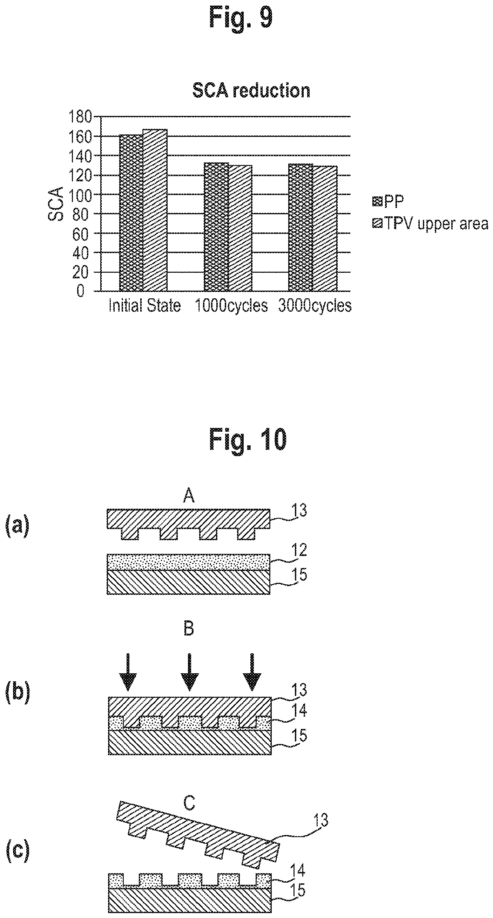

Fig. 9 shows for thermoplastic polymer bodies made of two different thermoplastic polymers, namely polypropylene (each left column) and TPV (each right column), the effect of the surface structure of the present invention on the reduction of the sliding contact angle (SCA) in abrasion experiments. As can be seen, the SCA reduction is small even after 1000 and 3000 abrasion cycles.

It was found moreover that the surface of the thermoplastic body was still superhydrophobic after the test and the antimicrobial properties were still available.

For the abrasion test, a Taber test was developed to perform accelerated wear testing. The Taber test is capable of providing reliable data in a matter of minutes compared to the years that may be required by in-use testing. The Taber test is used in order to check wear resistance in different materials. It tries to simulate the possible impact of the user cleaning such a non-metallic parts with rough/abrasive materials/clothes. The test exposure consists of a number of revolutions of different abrasive wheels/clothes depending on the target to be achieved with a different range of contact pressures. Some typical values of number of revolutions could be: 200 - 3000 revolutions/ strokes (500; 1000; 1500; 2000; 2500).

Contact pressure between 1 and 7N.

Possible plates of 100 x 100 mm (alternatively 100 mm diameter).

The Taber test consisted here of making 1000 and 3000 strokes with the abrasion equipment, with a pressure of 4.9 kPa (0.05 kgf/cm²) at a speed of 37 cycles/min with a dry piece of cloth.

Fig. 10 illustrates a process for the manufacture of a thermoplastic polymer body of the present invention using Thermal Nanoimprint Lithography (Th-NIL).

Fig. 10 (a) illustrates the phase A before the actual imprinting step. A pre-fabricated mold 13 with a negative of the to imprinted regular pattern 3 is held above an untreated thermoplastic body 12 which is here a film that is placed on a solid support 15 made from a different material.

Fig. 10 (b) illustrates the phase B during the imprinting step when a pressure is applied on the pre-fabricated mold 13, as illustrated by the arrows. A thermoplastic polymer body 14 with a surface structure 1 which has been made from the untreated thermoplastic body 12 shown in Fig. 10(a) can be recognized above the solid support 15.

Fig. 10 (c) illustrates the phase C when the pre-fabricated mold 13 is removed from the thermoplastic polymer body 14 with a surface structure 1. 15 is a solid support for the thermoplastic polymer body 14.

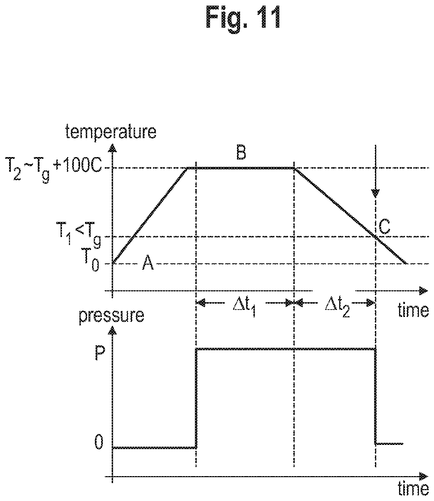

Fig. 11 shows the changes of temperature and pressure during the process shown in Fig. 10. As can be seen, the temperature is increased during the phase A to soften the thermoplastic polymer of the untreated thermoplastic polymer body 12 and maintained at a maximum value during the phase B. Tg refers to the glass transition temperature of the thermoplastic polymer. In the phase C, the temperature is lowered. A high pressure is applied during phases B and C.

## Claims

1. Thermoplastic polymer body (14) with a surface structure (1) that contains in a smooth surface (2) a regular pattern (3) of micro-scale or smaller pillars (4, 5, 9, 10), wherein the regular pattern (3) of micro-scale or smaller pillars comprises two types of pillars (4, 5, 9, 10) that differ in height and cross-section (6), wherein all neighboring pillars (4, 5, 9, 10) are separated by a separation distance d ≤ 1 µm, wherein the pillars are prisms (9, 10) having a rectangular cross-section (6), **characterised in that** a cross-section ratio C₁/C₂ between prisms of a first type (9) with a height H₁ and prisms of a second type (10) with a height H₂ is above 50.

2. Thermoplastic polymer body (14) according to any of the above claims, wherein the regular pattern (3) consists of two types of pillars (4, 5, 9, 10).

3. Thermoplastic polymer body (14) according to claim 1 or 2, wherein the prisms (9, 10) have a quadratic cross-section (6) and differ in height such that a height ratio H₁/H₂ between prisms of a first type (9) with the height H₁ and prisms of a second type (10) with the height H₂ is in the range of from 1.5 to 5.

4. Thermoplastic polymer body (14) according to any of claims 1 to 3, wherein the pillars (4, 5, 9, 10) contain or consist of a thermoplastic polymer selected from polypropylene, polymethylmethacrylate (PMMA) and polymers of the thermoplastic vulcanized class (TPV).

5. Thermoplastic polymer body (14) according to claim 4, wherein the polymer of the thermoplastic vulcanized class comprises polypropylene in a thermoplastic hard phase and EPDM rubber in an elastic soft phase.

6. Process for the manufacture of a thermoplastic polymer body (14) with a surface structure (1) that contains in a smooth surface (2) a regular pattern (3) of micro-scale or smaller pillars (4, 5, 9, 10), wherein the regular pattern of micro-scale or smaller pillars comprises two types of pillars (4, 5, 9, 10) that differ in height and cross-section (6), wherein all neighboring pillars (4, 5, 9, 10) are separated by a separation distance d ≤ 1 µm, and wherein the pillars are prisms (9, 10) having a rectangular cross-section (6) such that a cross-section ratio C₁/C₂ between prisms of a first type (9) with a height H₁ and prisms of a second type (10) with a height H₂ is above 50, comprising the steps:
(a) providing an untreated thermoplastic polymer body (12) with a smooth surface (2);
(b) heating the untreated thermoplastic polymer body (12) of step (a) above the glass transition temperature of the untreated thermoplastic polymer body (12) to sufficiently soften the thermoplastic polymer;
(c) pressing a pre-fabricated mold (13) with a negative of the to imprinted regular pattern (3) on the softened untreated thermoplastic polymer body (12) of step (b); and
(d) removing the pre-fabricated mold (13) to obtain the thermoplastic polymer body (14) with the surface structure (1).

7. Household appliance comprising a thermoplastic polymer body (14) according to claim 1.

## Patentansprüche

1. Thermoplastischer Polymerkörper (14) mit einer Oberflächenstruktur (1), die auf einer glatten Oberfläche (2) ein regelmäßiges Muster (3) aus mikroskaligen oder noch kleineren Säulen (4, 5, 9, 10) aufweist,
wobei das regelmäßige Muster (3) aus mikroskaligen oder noch kleineren Säulen zwei Typen von Säulen (4, 5, 9, 10) umfasst, die sich in Höhe und Querschnitt (6) unterscheiden, wobei alle benachbarten Säulen (4, 5, 9, 10) mit einem Trennungsabstand von d ≤ 1 µm voneinander getrennt sind,
wobei es sich bei den Säulen um Prismen (9, 10) mit einem rechteckigen Querschnitt (6) handelt,
**dadurch gekennzeichnet, dass** ein Querschnittsverhältnis C₁/C₂ zwischen Prismen eines ersten Typs (9) mit einer Höhe H₁ und Prismen eines zweiten Typs (10) mit einer Höhe H₂ mehr als 50 beträgt.

2. Thermoplastischer Polymerkörper (14) nach einem der vorhergehenden Ansprüche, wobei das regelmäßige Muster (3) aus zwei Typen von Säulen (4, 5, 9, 10) besteht.

3. Thermoplastischer Polymerkörper (14) nach Anspruch 1 oder 2, wobei die Prismen (9, 10) einen quadratischen Querschnitt (6) und eine unterschiedliche Höhe aufweisen, so dass ein Höhenverhältnis H₁/H₂ zwischen Prismen eines ersten Typs (9) mit der Höhe H₁ und Prismen eines zweiten Typs (10) mit der Höhe H₂ im Bereich von 1,5 bis 5 liegt.

4. Thermoplastischer Polymerkörper (14) nach einem der Ansprüche 1 bis 3, wobei die Säulen (4, 5, 9, 10) vorzugsweise ein thermoplastisches Polymer enthalten, das unter Polypropylen, Polymethylmethacrylat (PMMA) und Polymeren aus der Klasse thermoplastischer Vulkanisate (TPV) ausgewählt ist, oder daraus bestehen.

5. Thermoplastischer Polymerkörper (14) nach Anspruch 4, wobei das Polymer aus der Klasse thermoplastischer Vulkanisate Polypropylen in einer thermoplastischen Hartphase und EPDM-Kautschuk in einer elastischen Weichphase umfasst.

6. Verfahren zur Herstellung eines thermoplastischen Polymerkörpers (14) mit einer Oberflächenstruktur (1), die in einer glatten Oberfläche (2) ein regelmäßiges Muster (3) aus mikroskaligen oder noch kleineren Säulen (4, 5, 9, 10) enthält, wobei das regelmäßige Muster aus mikroskaligen oder noch kleineren Säulen zwei Typen von Säulen (4, 5, 9, 10) umfasst, die sich in Höhe und Querschnitt (6) unterscheiden, wobei alle benachbarten Säulen (4, 5, 9, 10) mit einem Trennungsabstand von d ≤ 1 µm voneinander getrennt sind und es sich bei den Säulen um Prismen (9, 10) handelt, die einen solchen rechteckigen Querschnitt (6) aufweisen, dass ein Querschnittsverhältnis C₁/C₂ zwischen Prismen eines ersten Typs (9) mit einer Höhe H₁ und Prismen eines zweiten Typs (10) mit einer Höhe H₂ mehr als 50 beträgt, mit folgenden Schritten:
a) Bereitstellen eines unbehandelten thermoplastischen Polymerkörpers (12) mit einer glatten Oberfläche (2),
b) Erwärmen des unbehandelten thermoplastischen Polymerkörpers (12) aus Schritt a) auf mehr als die Glasübergangstemperatur des unbehandelten thermoplastischen Polymerkörpers (12) zwecks ausreichenden Weichwerdens des thermoplastischen Polymers,
c) Pressen eines vorgefertigten Formwerkzeugs (13) mit einem Negativ des einzuprägenden regelmäßigen Musters (3) auf den weichen unbehandelten thermoplastischen Polymerkörper (12) aus Schritt b) und
d) Abnehmen des vorgefertigten Formwerkzeugs (13) zwecks Erhaltens des thermoplastischen Polymerkörpers (14) mit der Oberflächenstruktur (1).

7. Haushaltsgerät mit einem thermoplastischen Polymerkörper (14) nach Anspruch 1.

## Revendications

1. Corps en polymère thermoplastique (14) avec une structure de surface (1) qui contient dans une surface lisse (2) un motif régulier (3) de piliers microscopiques ou plus petits (4, 5, 9, 10), dans lequel le motif régulier (3) de piliers microscopiques ou plus petits comprend deux types de piliers (4, 5, 9, 10) qui diffèrent de par leur hauteur et leur section transversale (6), dans lequel tous les piliers voisins (4, 5, 9, 10) sont séparés d'une distance de séparation d ≤ 1 µm, dans lequel les piliers sont des prismes (9, 10) ayant une section transversale (6) rectangulaire, **caractérisé en ce qu'**un rapport de section transversale C₁/C₂ entre des prismes d'un premier type (9) avec une hauteur H₁ et des prismes d'un deuxième type (10) avec une hauteur H₂ est au-dessus de 50.

2. Corps en polymère thermoplastique (14) selon l'une quelconque des revendications ci-dessus, dans lequel le motif régulier (3) est constitué de deux types de piliers (4, 5, 9, 10).

3. Corps en polymère thermoplastique (14) selon la revendication 1 ou la revendication 2, dans lequel les prismes (9, 10) ont une section transversale (6) quadratique et diffèrent de par leur hauteur de telle sorte qu'un rapport de hauteur H₁/H₂ entre des prismes d'un premier type (9) avec la hauteur H₁ et des prismes d'un deuxième type (10) avec la hauteur H₂ soit compris dans la gamme allant de 1,5 à 5.

4. Corps en polymère thermoplastique (14) selon l'une quelconque des revendications 1 à 3, dans lequel les piliers (4, 5, 9, 10) contiennent ou sont constitués d'un polymère thermoplastique sélectionné parmi le polypropylène, le polyméthacrylate de méthyl (PMMA) et des polymères de la classe des thermoplastiques vulcanisés (TPV).

5. Corps en polymère thermoplastique (14) selon la revendication 4, dans lequel le polymère de la classe des thermoplastiques vulcanisés comprend du polypropylène dans une phase dure thermoplastique et du caoutchouc EPDM dans une phase molle élastique.

6. Procédé pour la fabrication d'un corps en polymère thermoplastique (14) avec une structure de surface (1) qui contient dans une surface lisse (2) un motif régulier (3) de piliers microscopiques ou plus petits (4, 5, 9, 10), dans lequel le motif régulier de piliers microscopiques ou plus petits comprend deux types de piliers (4, 5, 9, 10) qui diffèrent de par leur hauteur et leur section transversale (6), dans lequel tous les piliers voisins (4, 5, 9, 10) sont séparés d'une distance de séparation d ≤ 1 µm, et dans lequel les piliers sont des prismes (9, 10) ayant une section transversale (6) rectangulaire telle qu'un rapport de section transversale C₁/C₂ entre des prismes d'un premier type (9) avec une hauteur H₁ et des prismes d'un deuxième type (10) avec une hauteur H₂ soit au-dessus de 50, comprenant les étapes :
(a) de fourniture d'un corps en polymère thermoplastique non traité (12) avec une surface lisse (2) ;
(b) de chauffage du corps en polymère thermoplastique non traité (12) de l'étape (a) au-dessus de la température de transition vitreuse du corps en polymère thermoplastique non traité (12) afin de ramollir suffisamment le polymère thermoplastique ;
(c) de pression d'un moule préfabriqué (13) avec un négatif du motif régulier (3) à imprimer sur le corps en polymère thermoplastique non traité (12) ramolli de l'étape (b) ; et
(d) de retrait du moule préfabriqué (13) afin d'obtenir le corps en polymère thermoplastique (14) avec la structure de surface (1).

7. Appareil électroménager comprenant un corps en polymère thermoplastique (14) selon la revendication 1.
